Europäisches Patentamt

European Patent Office

Office européen des brevets

(11) Publication number: **0 481 444 A1**

# EUROPEAN PATENT APPLICATION

(21) Application number: **91117640.2**

(22) Date of filing: **15.10.91**

(51) Int. Cl.⁵: **C04B 18/02**, B09B 3/00, B01J 2/00, C02F 11/00

(30) Priority: **19.10.90 IT 2180290**

(43) Date of publication of application:
**22.04.92 Bulletin 92/17**

(84) Designated Contracting States:
**AT BE CH DE DK ES FR GB GR IT LI LU NL SE**

(71) Applicant: **TECNAV S.r.l.**
**Via E. Gianturco 11**
**I-00196 Rome(IT)**

(72) Inventor: **Contento, Maria Pia**
**Viale Venezia, 506**
**I-33100 Udine(IT)**
Inventor: **Cioffi, Flavio**
**Viale Venezia, 506**
**I-33100 Udine(IT)**

(74) Representative: **Gervasi, Gemma et al**
**NOTARBARTOLO & GERVASI Srl Viale**
**Bianca Maria 33**
**I-20122 Milan(IT)**

(54) Ceramized surface granulates, preparation and use thereof.

(57) Ceramized surface granulates are described, obtained by mixing prevailingly inorganic industrial wastes of which one at least of toxic and harmful type and at least two of non-toxic and non-harmful type, milling of the obtained mixture, granulation, drying and treatment at a temperature of between 800 and 1300 °C, without any special additive, which do not release polluting substances even if milled and dipped into concentrated sulphuric or hydrochloric acid, useful in particular as filling materials in the production of concrete with high mechanical characteristics and of other cement articles.

EP 0 481 444 A1

## A. Technical Field

The present invention relates to ceramized surface granulates, to the preparation and the use thereof.

The term "ceramized" means a surface hardened by means of high-temperature processes, typically higher than 900°C.

In particular, the granulates of the present invention are prepared starting from prevailingly inorganic industrial wastes. Whenever used herein, the term "waste" indicates the prevailingly inorganic toxic, harmful or special industrial wastes, which are referred to in the Decree of the President of the Italian Republic No. 915 of the 10th September 1982 and subsequent modifications, which exhibit an organic carbon content below 30%.

## B. Technical Problem

As is known, serious ecological and economic problems originate in an accumulation of toxic and harmful wastes deriving from several kinds of activities connected with the present industrial civilization.

In particular, the prevailingly industrial wastes, consisting of blast furnace and foundry slags, ashes and cinders coming from the combustion of coal and of mineral oil, slurries from the abatement of flue gases, slurries from the grinding of metals and rocks, galvanic slurries, residue of ceramic workings, slurries from tanning workings, electric furnace slags, paint smudges, ashes from thermo-destruction plants, slurries and slags from ore workings, slurries coming from chemical and electrochemical processes, other than the prevailingly organic wastes, which can be eliminated by combustion or disposed of by means of chemical or biological processes, are practically understroyable as they contain considerable percentages of silico-aluminates, aluminates, silicates and metal oxides.

For many years said wastes have been accumulated in non-inhabited areas or directly discharged into the sea.

Both these solutions are no longer possible as the consequent pollution of the water beds or of the coasts has reached such levels as to compel the authorities to impose a prohibition for these kinds of disposals.

Continuous efforts in the research field are being made in order to find new methods of recycling said wastes, simultaneously eliminating their harmfulness characteristics and safeguarding the environmental integrity.

## C. Prior Art

Among the systems nowadays utilized to modify the chemico-physical characteristics of the toxic and harmful wastes with a view to eliminating or at least reducing their hazard degree, there are to be mentioned the incineration or pyrolysis, decyanuration and chromate reduction.

All these processes are extremely expensive, permit a rather poor toxicity reduction and, on their part, contribute to the environmental pollution due to the generation of toxic flue gases and to the high heavy metal content of their residual ashes.

Another known type of treatment is represented by the stabilization-solidification,which permits to transform the wastes into solid masses having homogeneous characteristics: this treatment is utilizable only for a limited number of toxic substances and does not provide irreversibly insoluble products.

Another method of eliminating prevailingly inorganic industrial wastes consists in mixing said wastes with a binder, for example Portland cement, and with proper additives, so forming, with the obtained mixtures, manufactured articles, which do not release toxic components to the atmosphere, even if exposed to weather.

The articles so obtained do not always exhibit high mechanical characteristics and require to be mixed with - sometimes considerable - amounts of very expensive products (fluxes or additives).

## D. Detailed Description of the Invention

The Applicant has now found that it is possible to convert a mixture of prevailingly inorganic wastes into a ceramized surface granulate without using any particular additive.

Said granulate makes it possible to eliminate any risk of pollution since it does not release polluting substances even if it is ground and dipped into concentrated sulphuric acid or hydrochloric acid. According to an essential characteristic of the present invention, the ceramized surface granules are composed of mixtures of prevailingly inorganic industrial wastes and have a particle size ranging from 0.1 to 90 mm, prefrably from 0.1 to 25 mm, a mass loss due to the abrasion, determined according to standard UNI 8520/19, lower than 30%, furthermore, they are not toxic according to the definition of DPR No. 915 of September 10, 1982.

The granulates of the invention are prepared by mixing from 20 to 70 parts by weight of at least a toxic and harmful waste and from 20 to 70 parts by weight of at least two non-toxic and non-harmful wastes, on condition that one of said two non-toxic and non-harmful wastes is a residue of chemical processings and is present in an amount of from 1 part to 5 parts by weight calculated on the total dry mixture and that the weight ratio between the sum of the silico-aluminates, silicates and aluminates and the sum of the metal oxides ranges from 1:1 to 4:1.

Whenever used herein, the terms "toxic and harmful" and "non-toxic and non-Harmful" have the same meanings as defined in the Decree of the President of the Republic No. 915 of the 10th September 1982.

Among the toxic and harmful wastes, which are suitable to form the granulates of the present invention, there are to be mentioned the slurries deriving from the abatement of foundry flue gases, the blast furnace and foundry slags, the slurries deriving from galvanic processes and the slurries coming from ceramic workings.

Examples of non-toxic and non-harmful wastes are ashes deriving from coal thermodestruction, slurries deriving from the granite working, molding sands, glass working residues and chemical processing residues such as the caprolactam processing wastes, sulphur dioxide abatement slurries, paper industry wastes, distillery and sugar mill wastes.

The granulates according to the present invention, besides having a ceramized surface, possess also mechanical characteristics, in particular compression resistance, which make them very useful as fillers in the preparation of special concretes or cement articles. Typically, the granules according to the invention exhibit a mass loss due to abrasion, determined according to standard UNI 8520/19, lower than 30% and generally ranging from 10% to 20%.

A particular care is to be devoted to the choice of components and proportions for preparing a mixture, in order that the utilized wastes may not contain components having differences in the melting temperatures above 600°C, in an amount exceeding 10% by weight calculated on the whole dry mixture, with a view to avoiding uncontrolled expansions of the granules during the thermal treatment, what would jeopardize the mechanical strength of the final product.

According to a basic feature of the present invention, the granulates are prepared by a process comprising the following essential steps:

a) admixing 20-70 parts by weight of at least a toxic and harmful waste and 20-70 parts by weight of at least two non-toxic and non-harmful wastes, on condition that one of said two non-toxic and non-harmful wastes is a chemical processing residue and is present in amounts of from 1 to 5 parts by weight calculated on the total dry mixture, and that the weight ratio between the sum of the silicoaluminates, silicates and aluminates and the sum of the metal oxides ranges from 1:1 to 4:1;

b) grinding the resulting mixture until obtaining an average particle size of the mixture ranging from 100 to 200 microns;

c) adding water to the ground mixture in an amount ranging from 5% to 50% by weight calculated on the total dry mixture;

d) granulating the mixture obtained in step c) to granules of from 0.1 to 90 mm;

e) drying said granules by means of heating and ventilation up to a humidity degree of 5% by weight calculated on the dried granules, employing temperatures ranging from 50°C to 400°C;

f) subjecting the dried granules to a heat-treatment at a temperature ranging from 800° to 1300°C and for times ranging from 5 minutes to 6 hours, and cooling the granule to room temperature.

According to a preferred embodiment of the present invention, the drying step is conducted at temperatures ranging from 70° to 250°C. Typically the drying time ranges from 0.5 hours to 24 hours.

According to another preferred embodiment, the granulation and drying steps are conducted in a single operation, using, for example, a high inner turbulence drier.

The heat-treatment step is preferably carried out in rotary furnaces.

According to another embodiment of the process of the invention it is possible to replace the granulation step with a step in which the mixture of wastes mixed with water is shaped by means of drawing into little parallelepiped or cylindrical blocks having up to 10 cm thickness.

The drying and heat-treatment steps of the obtained granulates are carried out, of course, for times which are as longer as greater are the dimensions of the resulting granulates.

EXAMPLE 1

In an arm kneading machine, the following substances were mixed: 40 parts by weight of ceramic working slurries (prevailingly inorganic toxic and harmful industrial wastes);

30 parts by weight of coal thermodestruction ashes (prevailingly inorganic non-tocic and non-harmful industrial wastes);

27 parts by weight of slurries deriving from the abatement of foundry flue gases (prevailingly inorganic toxic and harmful industrial wastes);

3 parts by weight of sulphur dioxide abatementslurries (prevailingly inorganic non-toxic and non-harmful industrial wastes);

15 parts by weight of water.

The ratio between the sum of the weight amounts of the silico-aluminates, aluminates and silicates and the sum of the weight amounts of the metal oxides contained in the mixture was 2:1.

The resulting mix was granulated by means of a pan granulator and the obtained granules were dried and heat-treated as is indicated hereinafter, thereby obtaining the following characteristics:

| | |
|---|---|
| Maximum size of the obtained granules: | 0.10 mm |
| Drying: | 4 hours at 105°C |
| Granules compression resistance (prior to heat-treatment): | 0.5 N/mm$^2$ |
| Heat treatment: | 0.5 hours at 1,100°C |
| Weight loss due to granules abrasion (after heat-treatment - UNI 8520/19): | 20% by weight. |
| Release test: (DPR No. 915 of 10.09.1982). | non-toxic |

EXAMPLE 2

In an arm kneading machine, the following substances were mixed: 40 parts by weight of granite working slurries (prevailingly non-toxic and non-harmful inorganic industrial wastes);

10 parts by weight of foundry sand (prevailingly inorganic non-toxic and non-harmful industrial wastes);

10 parts by weight of slurries deriving from the abatement of foundry flue gases (prevailingly inorganic toxic and harmful industrial wastes);

15 parts by weight of galvanic processes slurries (prevailingly inorganic toxic and harmful industrial wastes);

18 parts by weight of glass working residues (prevailingly inorganic non-toxic and non-harmful industrial wastes);

2 parts by weight of caprolactam processing wastes (prevailingly inorganic non-toxic and non-harmful industrial wastes);

18 parts by weight of water.

The ratio between the sum of the weight amounts of silico-aluminates, aluminates and silicates and the sum of the weight amounts of the metal oxides contained in the mixture was 1.7:1.

The resulting mixture was granulated in a pan granulator and the resulting granules were dried and subjected to heat-treatment as is indicates hereinafter, thereby obtaining the following characteristics:

| | |
|---|---|
| Maximum size of the obtained granules: | 0.10 mm |
| Drying: | 4 hours at 105°C |
| Granules compression resistance (before heat-treatment): | 0.8 N/mm$^2$ |
| Heat-treatment: | 0.5 hours at 1,000°C |
| Weight loss due to granule abrasion (after heat-treatment - UNI 8520/19): | 19% by weight |
| Release test: (DPR No. 915 of 10.09.1982) | non-toxic |

EXAMPLE 3

In an arm kneading machine, there were mixed, in the same ratios, the industrial wastes cited in Example 1, along with a water amount equal to 20% by weight calculted on the total dry mixture.

By means of a pan granulator, the mixture so obtained was formed into granules having a thickness exceeding 80 mm. The resulting granules were dried for 24 hours at 105°C, subjected to a 3-hour heat-treatment at 1100°C, then cut and rectified until obtaining two fully co-planar faces having a section of 71 mm x 71 mm, in accordance with standard UNI 8520/17; lastly, they were subjected to a compression test according to said standard. The resulting granules exhibited the following main characteristics:

| | |
|---|---|
| Compression resistance (UNI 8520/17): Release test: (DPR No. 915 of 10.09.1982). | 100 N/mm$^2$ |

EXAMPLE 4

In an arm kneading machine there were mixed, in the same ratios, the industrial wastes utilized in Example 2, along with a water amount equal to 20% by weight calculated on the total dry mixture.

The resulting mixture was formed, by means of a pan granulator, into granules having a thickness exceeding 80 mm. The resulting granules were dried for 24 hours at 105°C, heat-treated for 3 hours at 1000°C, then cut and rectified until obtaining two perfectly coplanar faces having a section of 71 mm x 71 mm, in accordance with standard UNI 8520/17, and subjected to a compression test according to said standard. The resulting granules exhibited the following main characteristics:

| | |
|---|---|
| Compression resistance (UNI 8520/17): Release test: (DPR No. 915 of 10.09.1982). | 150 N/mm$^2$ non-toxic |

**Claims**

1.  Ceramized surface granulates consisting of mixtures of prevailingly inorganic industrial wastes, having a particle size ranging from 0.1 to 90 mm, a mass loss due to abrasion, determined according to standard UNI 8520/19, below 30%, said granulates being non-toxic according to the definition of DPR No. 915 of 10.09.1982.

2.  The ceramized surface granulates as claimed in claim 1, wherein said granulometry ranges from 0.1 to 25 mm.

3.  The ceramized surface granulates as claimed in claim 1, prepared by mixing 20-70 parts by weight of at least a toxic and harmful waste and 20-70 parts by weight of at least two non-toxic and non-harmful wastes, on condition that one of said two non-toxic and non-harmful wastes is a chemical processing residue and is present in amounts of from 1 to 5 parts by weight calculated on the total dry mixture, and the weight ratio between the sum of the silico-aluminates, silicates and aluminates and the sum of the metal oxides ranges from 1:1 to 4:1.

4.  The ceramized surface granulates as claimed in claim 3, characterized in that the utilized wastes do not contain components having differences in the melting temperatures exceeding 600°C in an amount higher than 10% by weight calculated on the total dry mixture.

5.  A process for preparing ceramized surface granulates, which comprises the following essential steps:
    a) mixing 20-70 parts by weight of at least a toxic and harmful waste and 20-70 parts by weight and at least two non-toxic and non-harmful wastes, on conditions that one of said two non-toxic and non-harmful wastes is a chemical processing residue and is present in amounts of from 1 to 5 parts by weight calculated on the total dry mixture, and that the weight ratio between the sum of the silicoaluminates, silicates and aluminates and the sum of the metal oxides ranges from 1:1 to 4:1.
    b) grindind the resulting mixture until obtaining an average particle size of the mixture ranging from 100 to 200 microns;
    c) adding water to the ground mixture in an amount ranging from 5% to 50% by weight calculated on the total dry mixture;
    d) granulating the mixture obtained in step c) to obtain granules of from 0.1 to 90 mm;
    e) drying said granules by means of heating and ventilation up to a humidity degree of 5% by weight referred to the dried granules, employing temperatures ranging from 50°C to 400°C;
    f) subjecting the dried granules to a heat-treatment at a temperature ranging from 800 to 1300°C and for times of from 5 minutes to 6 hours, and cooling the granulate to room temperature.

**6.** The process as claimed in claim 5, wherein the drying step is conducted at temperatures ranging from 70°C to 250°C.

**7.** The process as claimed in claim 5, wherein the granulation and drying steps are conducted in a single operation by means of high inner turbulence driers.

**8.** The process as claimed in claim 5, wherein the heat-treatment step takes place in rotary furnaces.

**9.** Use of the ceramized surface granulates as claimed in claim 1 as fillers for preparing special concretes or cement articles.

European
Patent Office

EUROPEAN SEARCH
REPORT

Application Number

EP 91 11 7640

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 734 879   (INCA BAUSTOFFTECHNIK GMBH) – – – | | C 04 B 18/02 B 09 B 3/00 B 01 J 2/00 C 02 F 11/00 |
| A | EP-A-0 376 690   (SHIN NIPPON HEAT PROCESSING CO.,LTD) – – – | | |
| A | DE-A-3 908 172   (GUMBMANN ET AL.) – – – | | |
| A | DE-A-3 804 826   (D.KLEINSCHMIDT) – – – | | |
| A | CHEMICAL ABSTRACTS, vol. 87, no. 22, 28 November 1977, Columbus, Ohio, US; abstract no. 172019A, ORII,MAKOTO ET AL.: 'AGGREGATE MANUFACTURE FROM INDUSTRIAL WASTES' page 255 ;column L ; * abstract * * – – – – – | | |

TECHNICAL FIELDS
SEARCHED (Int. Cl.5)

C 04 B
B 09 B
B 01 J
C 02 F

The present search report has been drawn up for all claims

| Place of search | Date of completion of search | Examiner |
|---|---|---|
| The Hague | 28 November 91 | PYFFEROEN K. |